Europäisches Patentamt

European Patent Office

Office européen des brevets

(19)

(11) Numéro de publication: **0 287 485**
**A1**

## (12) DEMANDE DE BREVET EUROPEEN

(21) Numéro de dépôt: **88420120.3**

(22) Date de dépôt: **13.04.88**

(51) Int. Cl.⁴: **H 01 C 7/02**

(30) Priorité: **15.04.87 FR 8705781**

(43) Date de publication de la demande:
**19.10.88 Bulletin 88/42**

(84) Etats contractants désignés:
**AT BE CH DE ES GB GR IT LI LU NL SE**

(71) Demandeur: **LE CARBONE-LORRAINE**
**Tour Manhattan Cédex 21**
**F-92095 Paris la Defense 2 (FR)**

(72) Inventeur: **Carmona, François**
**8, rue Fontaine du Forgeron**
**F-33170 Gradignan (FR)**

Maire, Jacques
10, rue du Jourdain
F-75020 Paris (FR)

Septier, Hélène
15, rue Dulong
F-75017 Paris (FR)

Canet, Roland
30, rue Delestraint
F-33310 Lormont (FR)

Delhaes, Pierre
3, Allée de Mouleyrens
F-33170 Gradignan (FR)

(74) Mandataire: **Pascaud, Claude et al**
**PECHINEY 28, rue de Bonnel**
**F-69433 Lyon Cédex 3 (FR)**

(54) Matériau ayant une résistivité à coefficient de température positif.

(57) L'invention concerne un matériau ayant une résistivité électrique présentant un coefficient de température positif constitué d'une matrice en matière plastique et de particules conductrices dispersées dans la matrice, matériau caractérisé en ce que la matière plastique de la matrice est une résine thermodurcissable choisie parmi des résines telles que les époxy, polyimides, polyesters insaturés, silicones, polyuréthanes, phénoliques.

Les particules conductrices sont sous forme de fibres choisies parmi les fibres de carbone ou de graphite revêtues ou non de métal ou d'alliage métallique, les fibres en composé d'insertion de graphite, les fibres métalliques, les fibres céramiques revêtues ou non de métal ou d'alliage métallique.

Les fibres ont un diamètre de l'ordre de 10 μm et une longueur de 1 à 3 mm.

EP 0 287 485 A1

**Description**

## MATERIAU AYANT UNE RESISTIVITE A COEFFICIENT DE TEMPERATURE POSITIF

### OBJET DE L'INVENTION

La présente invention est relative à un matériau à résistivité électrique présentant un coefficient de température positif (CTP), à sa préparation et à ses applications.

### ETAT DE LA TECHNIQUE

Il est connu que les matières plastiques peuvent être rendues conductrices de l'électricité en leur incorporant des quantités convenables de particules divisées. Ces matières plastiques "conductrices" ne présentent pas toutes un coefficient de température positif. Dans ce domaine particulier, jusqu'à présent, les travaux ont porté essentiellement sur les polymères thermoplastiques. Ainsi, on peut citer des compositions particulières constituées de certains polymères thermoplastiques et de particules conductrices,

- en noir de carbone, comme par exemple dans les brevets français FR 2 374 357, FR 2 423 037, FR 2 443 123.
- en métal, comme par exemple dans les demandes de brevet japonais publiées JA-60 31540 ou JA-57 12061, le brevet français FR-2 321 751,
- en fibres de carbone, comme par exemple dans les demandes de brevet japonais publiées JA-57 12061 et JA-59 196334.

### INCONVENIENTS DES POLYMERES THERMOPLASTIQUES A CTP

Les polymères thermoplastiques dans ce domaine présentent plusieurs inconvénients :
- ils se ramollissent à haute température,
- ils ne sont pas faciles à mettre en oeuvre du fait qu'on ne peut travailler à température ordinaire, notamment lors du mélange et de la dispersion des particules conductrices.

Le but principal de l'invention est de pallier ces inconvénients tout en conservant au matériau les mêmes qualités.

### OBJET DE L'INVENTION

Selon l'invention, le matériau présentant un CTP de résistance électrique est constitué d'une matrice en matière plastique et de particules conductrices de l'électricité dispersées dans la matrice et se caractérise en ce que la matière plastique de la matrice est une résine thermodurcissable.

Les figures 1 à 10 illustrent la mise en oeuvre de l'invention.

La figure 1 montre la relation entre la résistivité ρ en ohm-centimètre, la température T et la concentration Ø en particules conductrices.

La figure 2 montre la variation de ρ en fonction de Ø (en %), selon un premier exemple de mise en oeuvre.

La figure 3 montre la variation de la résistivité ρ en fonction de la température, selon deux directions, perpendiculaire et parallèle au plan de l'échantillon.

La figure 4 montre l'influence de la longueur des fibres sur la résistivité ρ.

La figure 5 montre la variation, en fonction du temps, de l'intensité du courant dans un échantillon ayant une résistance à froid de 6 ohms.

La figure 6 montre les variations thermiques de la résistivité en fonction de la concentration volumique en fibres.

La figure 7 montre la variation de la résistance ohmique d'un échantillon en fonction de la température.

Les figures 8 et 9 montrent la réponse à des surintensités cycliques pour des échantillons ayant des résistances nominales, à froid, de 0,27 et, respectivement, 0,25 ohm.

La figure 10 montre l'influence de la nature de la matrice "ARALDITE"® sur la résistivité ρ.

Mise en oeuvre de l'invention

La résine thermodurcissable peut être choisie parmi des résines telles que les époxy, les polyimides, les polyesters insaturés, les silicones, les polyuréthanes, les résines phénoliques. Selon l'invention, les particules conductrices sont de préférence
- de grande taille (> ; 1μm)
- sous forme fibreuse, les fibres ayant un diamètre de l'ordre de 10 μm
- de longueur comprise entre 1 et 3 mm.

Elles peuvent être en carbone ou en graphite, en carbone ou en graphite revêtu de métal (tel que du nickel) ou d'alliage métallique, en composé d'insertion de graphite, en métal ou alliage métallique tel que du nickel, cuivre, constantan etc., en matériaux céramiques tels que du carbure de silicium, revêtue ou non de métal ou d'alliage métallique.

Les fibres en carbone éventuellement utilisées peuvent être obtenues
- par carbonisation de fibres en précurseur ex-mésophase brai ou polyacrylonitrile,
- par vapodéposition d'hydrocarbures.

Elles peuvent être utilisées telles quelles ou après graphitation.

Le choix de ces matériaux ainsi que celui des dimensions des particules et celui de leur taux dans la matrice sont essentiellement fonction de l'effet recherché.

Différents essais ont été réalisés en utilisant une même résine thermodurcissable et les mêmes particules conductrices avec concentrations volumiques variables Ø. En mesurant la résistivité électrique de ces divers matériaux à température ordinaire et la variation thermique de cette résistivité, on constate que :
- il existe un seuil de conduction pour une concentration critique Ø*
- une concentration maximale pour laquelle le matériau présente un CTP restant acceptable.

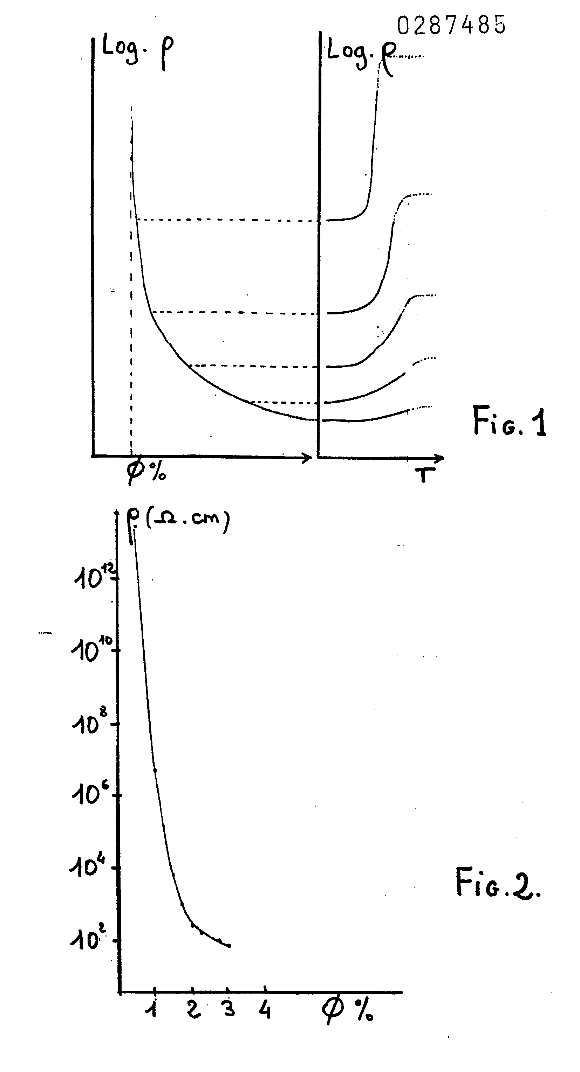

Les courbes de la figure 1, où ρ représente la résistivité, T la température et Ø la concentration en particules conductrices illustrent cette double constatation.

En conséquence, on voit que si l'application envisagée nécessite une intensité relativement importante, on choisit le couple de matériaux résine thermo-durcissable/particules conductrices le mieux adapté et la concentration en particules conductrices voisine de la concentration maximale de manière à avoir d'une part, la plus faible résistance à température ordinaire, et d'autre part, un CTP acceptable.

Préparation

Un des modes de préparation du matériau à CTP selon l'invention consiste pour l'essentiel :

- à mélanger et à disperser les particules conductrices dans la résine à l'état visqueux en présence de son durcisseur et d'adjuvants éventuels,
- à dégazer le mélange obtenu,
- à mettre en forme le mélange dégazé,
- à soumettre le mélange mis en forme à un traitement thermique (pour durcir la résine),
- à soumettre le matériau mis en forme et thermodurci à une opération de recuit à une température supérieure à la température de polymérisation.

La température du mélange et de la dispersion des particules est fonction de la résine choisie.

La dispersion des particules peut être faite par tout moyen convenable. Ainsi, elle peut être mécanique. Il faut simplement veiller à ce qu'il n'y ait pas rupture des particules notamment lorsqu'elles sont sous forme de fibres.

La mise en forme se fait en général par coulée du mélange visqueux dans des moules appropriés pouvant avoir des formes diverses : cylindrique, parallélépipédique, etc.

Le traitement thermique se fait à une température et pendant un temps qui dépendent de la résine choisie. Ainsi
- avec une résine de type ARALDITE LY® :
la température est de 45 °C pendant 2 heures.
- avec une résine de type ARALDITE F®:
la température est de 110 °C pendant 16 heures.
(N.B. ARALDITE LY et ARALDITE F sont des marques déposées de la Société CIBA-GEIGY A.G.)

Quant aux conditions de recuit, elles sont essentiellement fonction de l'application choisie et donc, entre autres, de la résine choisie.

Les exemples suivants donnés à titre indicatif et non limitatif illustrent l'invention.

Exemple 1

Dans cet exemple, la résine choisie est une résine èpoxy ARALDITE LY® et les particules conductrices, des fibres de carbone de longueur 1 mm et de diamètre 9 μm.

On prépare selon le procédé indiqué précédemment, plusieurs échantillons avec des concentrations volumiques Ø en fibres différentes.

La mise en forme se fait par coulée de barreaux et l'opération de recuit à 80 °C pendant 2 heures.

Des échantillons sont prélevés dans les barreaux finalement obtenus et l'on mesure pour chacun la résistivité ρ en fonction de la concentration Ø. Le résultat de ces mesures est représenté figure 2.

On mesure, par ailleurs, pour chaque échantillon, la résistivité en fonction de la température et l'on constate que la concentration critique se situe pour ce cas aux environs de 1,75 %.

Exemple 2

Dans cet exemple, on prépare un échantillon avec les mêmes matériaux et selon le même procédé que ceux de l'exemple 1 aux différences suivantes près :
- la concentration Ø est fixée à 1,75 %
- la mise en forme se fait par coulée directe d'une plaque de 3 mm d'épaisseur dans laquelle on découpe un échantillon.

On mesure les résistivités de l'échantillon dans deux directions, parallèle et perpendiculaire à son plan, en fonction de la température.

Les résultats des mesures sont reportés figure 3. On constate que :
- il existe une anisotropie de résistivité
- l'effet CTP est sensiblement le même dans les deux directions.

Ce matériau peut convenir comme dispositif de sécurité électrique pour de faibles intensités de l'ordre de quelques mA.

Exemple 3

On prépare de la même manière que décrite dans l'exemple 1 des échantillons contenant des fibres de carbone respectivement de longueur 1 mm et 3 mm avec la même concentration de l'ordre de 1,75 %.

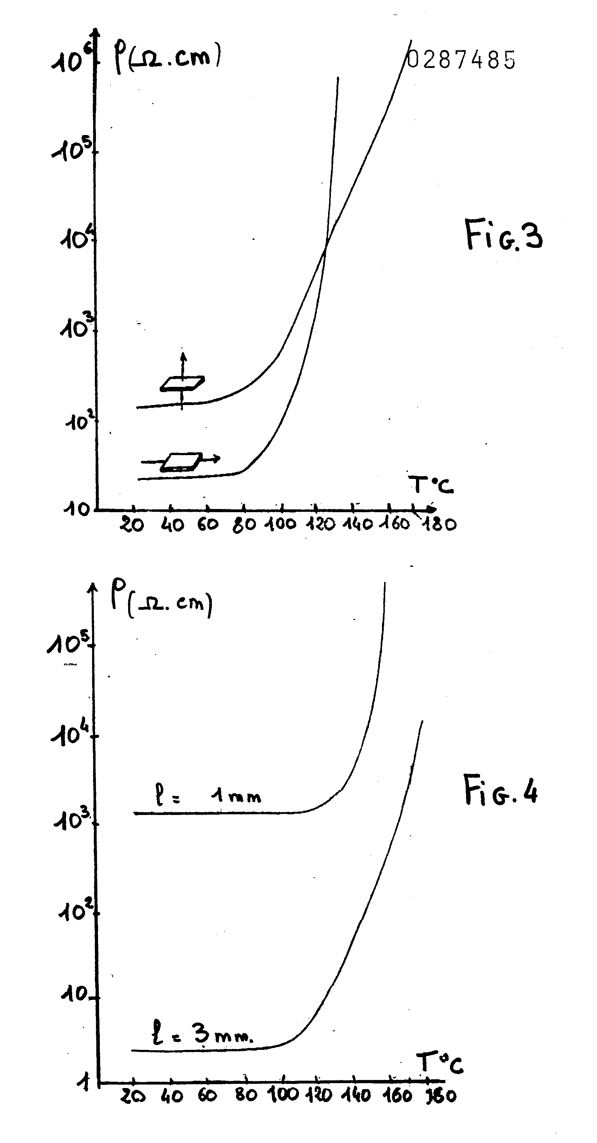

Si l'on compare la résistivité du matériau à fibres de 3 mm à celle du matériau à fibres de 1 mm, on constate que, à concentration volumique de fibres constante, la première est plus faible que la seconde comme le montre la figure 4 où l'on a reporté les variations thermiques de résistivités de matériaux contenant 1,75 % de fibres de carbone de longueur 1 et 3 mm respectivement. La diminution de la résistivité est de plus d'un facteur 100 et ne s'accompagne que d'une légère dégradation de l'effet CTP.

On voit l'avantage que présente le matériau à fibres 3 mm sur le matériau à fibres 1 mm.

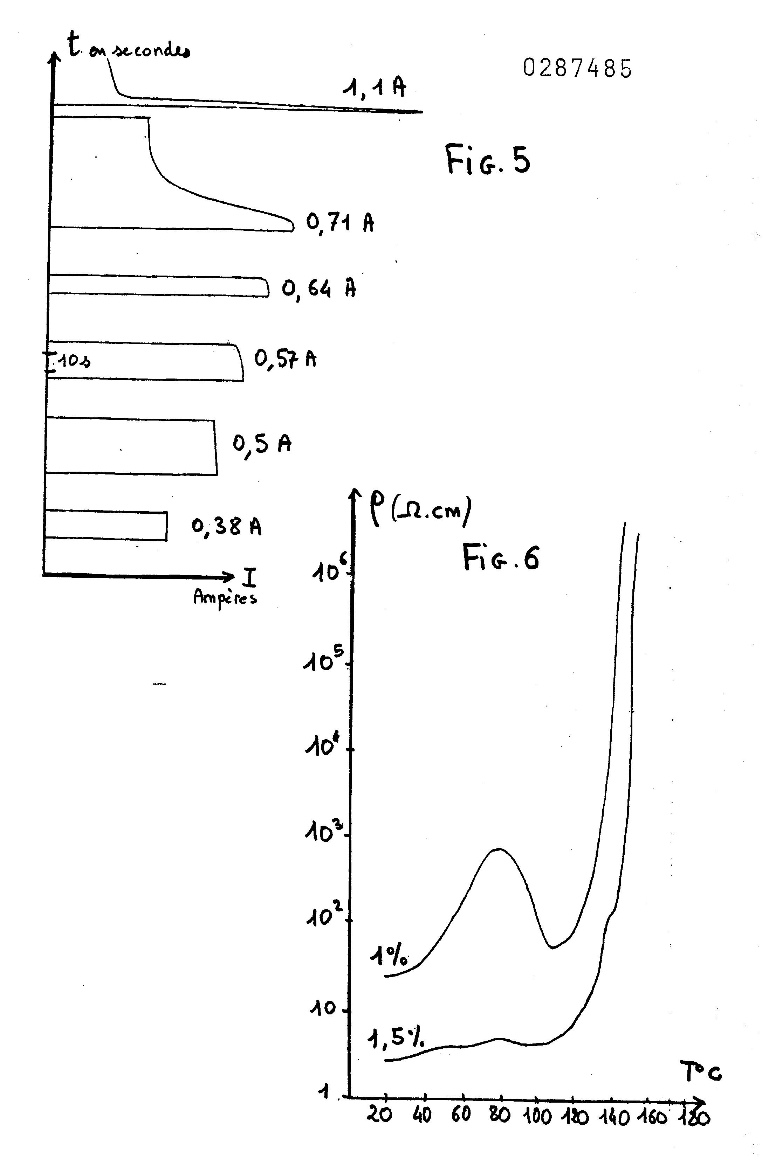

Ainsi, on réalise avec le matériau à fibres 3 mm un dispositif de sécurité : pour un échantillon de résistance nominale à froid égale à 6 Ω, la figure 5 montre la variation au cours du temps de l'intensité la traversant lorsque des sauts de tension lui sont appliqués. On constate que ce dispositif présente de bonnes propriétés de coupure à des intensités légèrement inférieures à 1 ampère.

Exemple 4

Cet exemple est une variante des exemples précédents : les particules conductrices sont ici des fibres de carbone recouvertes de nickel. Les dimensions de ces fibres sont les suivantes :
- diamètre des fibres de carbone : 9 μm
- épaisseur de nickel : 0,25 μm
- longueur moyenne : 1,4 mm

On mesure les variations thermiques de résistivité de deux matériaux ayant respectivement des concentrations volumiques de 1 et 1,5 % en fibres de carbone revêtues de nickel. Ces variations sont représentées figure 6. On constate un excellent effet CTP associé à des résistivités à froid remarquablement basses par rapport aux résistivités de matériaux contenant des fibres de carbone présentant un effet CTP comparable. Le matériau contenant 1 % de fibres présente un comportement anormal à froid, qui semble disparaître à plus forte concentration.

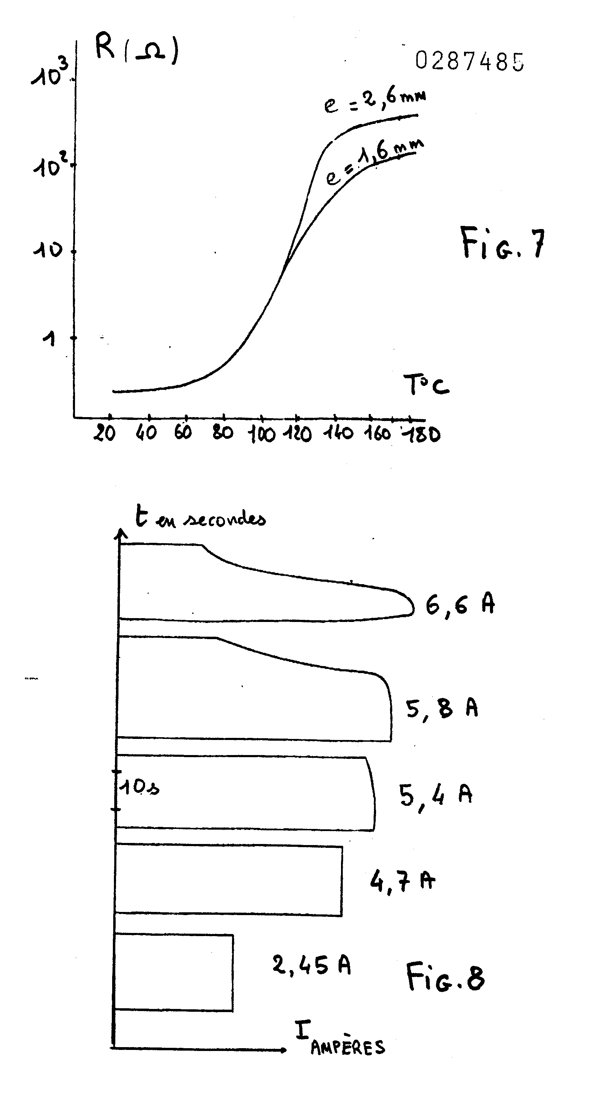

Par ailleurs, on mesure les variations thermiques de la résistance de deux échantillons de faible épaisseur (1,6 et 2,6 mm) de matériau contenant 1,6 % de fibres. Les résistances sont de l'ordre de 0,4 $\Omega$ à froid et multipliées par 1 000 à chaud, comme le montre la figure 7.

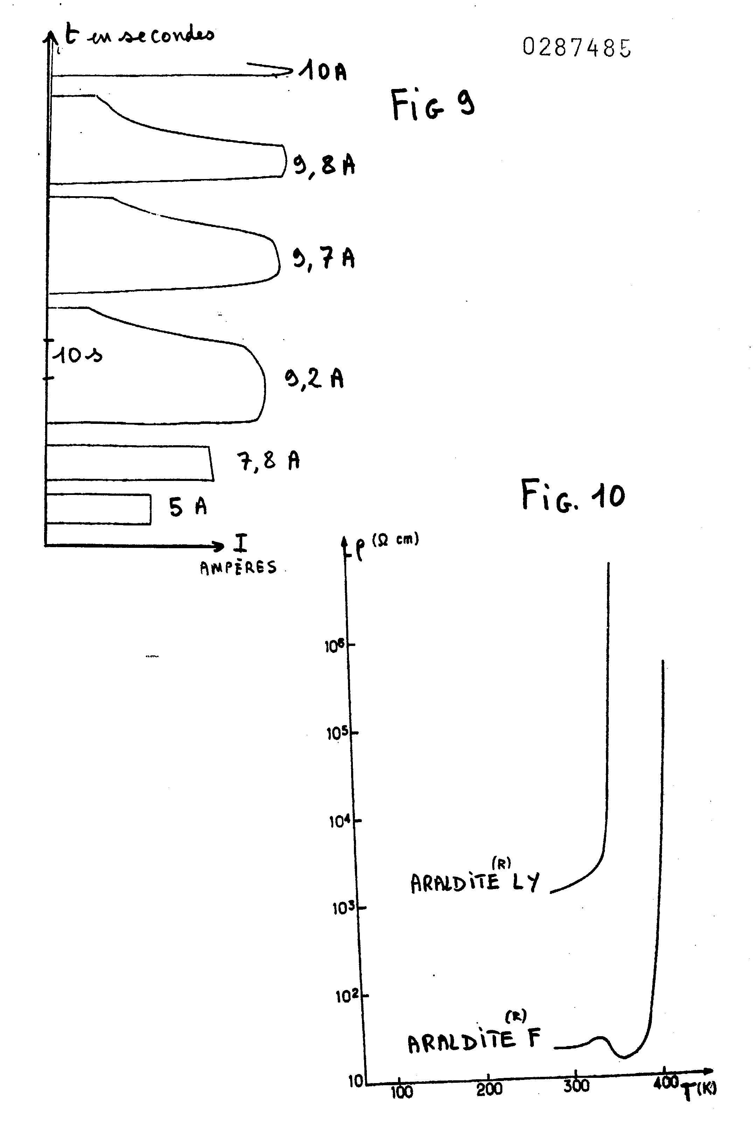

Enfin, les résultats d'essais dynamiques de réponse aux surintensités réalisés sur des échantillons de matériau contenant 1,3 % de fibres sont représentés figures 8 et 9. Les résistances à froid des échantillons sont respectivement 0,27 et 0,25 $\Omega$. Dans les deux cas, la résistance "à froid" est conservée jusqu'à des intensités de l'ordre de 5 ampères, l'effet de réduction de l'intensité apparaissant nettement vers 6 et 9 ampères respectivement, la résistance de référence dans le circuit étant de 2,5 $\Omega$ dans le premier cas et 0,5 $\Omega$ dans le second.

Ces exemples illustrent bien qu'avec la même résine thermodurcissable de base, mais avec des particules conductrices différentes tant au point de vue de leur nature que de leurs dimensions, avec des concentrations volumiques différentes, avec des mises en forme différentes, on peut obtenir des matériaux ayant des comportements différents que l'on peut adapter aux applications envisagées.

Il en est de même avec d'autres particules conductrices et/ou d'autres résines thermodurcissables, comme le montre l'exemple 5.

Exemple 5

Dans cet exemple, on prépare deux échantillons avec 2 résines époxy :
- ARALDITE LY®
- ARALDITE F®
comportant dans les 2 cas 2 % en volume de fibres de graphite de diamètre 9 $\mu$m et de longueur 1 mm.

La préparation se fait comme indiqué précédemment.

L'échantillon à matrice ARALDITE Ly® subit une opération de recuit à 80 °C pendant 2 heures et celui à matrice ARALITE F® subit une opération de recuit à 140 °C pendant 20 heures.

On mesure alors, sur ces deux échantillons, la résistivité $\rho$ en fonction de la température T. Les résultats sont reportés sur la figure 10. On constate que :
- pour une même température, la résistivité du matériau à matrice ARALDITE LY® est plus élevée que celle du matériau à matrice ARALDITE F®; ceci est dû au fait que la concentration critique $\emptyset^*$ est plus basse dans le second cas que dans le premier.
- l'effet CTP apparaît dans le second matériau à température plus élevée que dans le premier.

Cet exemple met bien en évidence l'influence de la nature du polymère utilisé.

## Revendications

1. Matériau à résistivité électrique présentant un coefficient de température positif caractérisé en ce qu'il est constitué d'une matrice en matière plastique thermodurcissable choisie parmi des résines telles que les époxy, polyimides, polyesters insaturés, silicones, polyuréthanes, phénoliques et en ce que les particules conductrices sont sous forme de fibres choisies parmi les fibres de carbone ou de graphite revêtues ou non de métal ou d'alliage métallique, les fibres en composé d'insertion de graphite, les fibres métalliques, les fibres céramiques revêtues ou non de métal ou d'alliage métallique.

2. Matériau selon la revendication 1 caractérisé en ce que les fibres ont un diamètre de l'ordre de 10 $\mu$m et une longueur de 1 à 3 mm.

0287485

Fig. 1

Fig. 2.

0287485

Fig.3

Fig.4

0287485

Fig. 5

Fig. 6

0287485

Fig. 7

Fig. 8

Fig 9

t en secondes

10 A

9,8 A

9,7 A

10 s

9,2 A

7,8 A

5 A

I
AMPÈRES

Fig. 10

$\rho$ ($\Omega$ cm)

$10^6$

$10^5$

$10^4$

ARALDITE(R) LY

$10^3$

$10^2$

ARALDITE(R) F

10

100     200     300     400   T (K)

Office européen
des brevets

**RAPPORT DE RECHERCHE EUROPEENNE**

Numero de la demande

EP 88 42 0120

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 038 714  (RAYCHEM CORP.) <br> * Revendications 1,5; page 4, ligne 11 - page 5, ligne 20; page 6 * | 1,2 | H 01 C   7/02 |
| D,A | FR-A-2 423 037  (RAYCHEM CORP.) <br> * Revendications 1,11,12,15,20; page 5, ligne 26 - page 6, ligne 2; page 9, lignes 26-36 * | 1 | |
| A | US-A-3 243 753  (F. KOHLER) <br> * Revendications 1,10; colonne 3, lignes 1-10 * | | |
| A | EP-A-0 123 540  (RAYCHEM CORP.) <br> * Revendications 1,5,6; page 5 * | 1,2 | |
| P,X | EP-A-0 224 903  (IDEMITSU KOSAN CO. LTD) <br> * Revendication 1; page 2, dernier alinéa - page 3, alinéa 1; page 5, lignes 2-19 * | 1 | |

DOMAINES TECHNIQUES
RECHERCHES (Int. Cl.4)

H 01 C

Le présent rapport a été établi pour toutes les revendications

| Lieu de la recherche | Date d'achèvement de la recherche | Examinateur |
|---|---|---|
| LA HAYE | 05-07-1988 | DECANNIERE L.J. |